# EUROPEAN PATENT APPLICATION

(11) **EP 4 760 546 A1**
(43) Date of publication of application: **17.06.2026**
(21) Application number: 25221239.4
(22) Date of filing: 05.12.2025
(51) Int. Cl.: G06F 17/40

(54) **SAMPLE ANALYSIS SYSTEM AND METHOD OF REPORT GENERATION**

(30) Priority: 12.12.2024 JP 2024217487
(71) Applicant: Jeol Ltd., Akishima, Tokyo 196-8558 (JP)
(72) Inventor: YOKOUCHI, Kazushiro, Tokyo, 196-8558 (JP); TSUTSUMI, Kenichi, Tokyo, 196-8558 (JP); UCHIDA, Tatsuya, Tokyo, 196-8558 (JP)
(74) Representative: Boult Wade Tennant LLP

(57) **Abstract**

A method of generating reports starts with comparing an event log (38) with a plurality of event patterns (74). It is found that there is a match between a certain series of events (80) and a certain event pattern (74). A data set (84) acquired by execution of the certain series of events (80) is incorporated into a template (76A) corresponding to the certain event pattern (74). Consequently, a candidate report (86) is generated. The automatically generated candidate report (86) is deleted as needed according to a user's instruction.

## Description

### TECHNICAL FIELD

The present disclosure relates to a sample analysis system and also to a method of report generation. More specifically, the present disclosure relates to a technique of automatically generating reports.

### BACKGROUND

Various sample analysis systems are being utilized. One example of such systems is an Auger electron spectrometer which is an instrument for analyzing a sample surface using Auger electron spectroscopy (AES). With this instrument, an electron beam is directed at a sample surface, and Auger electrons emanating from the sample surface are detected by a detector (spectrometer).

In general, a sample analysis system has a function of generating a report that represents the results of a measurement. During report generation, a user specifies a template that gives a report format. The user enters one or more sets of data into the specified template. Examples of data inserted into a report include SEM (scanning electron microscope) images, Auger electron images (elemental maps), and energy spectra.

In a sample analysis system, a plurality of operations for a sample analysis is recorded as events. In particular, an event log consisting of plural items of event information corresponding to plural events is generated. Document 1 (JP-A-2016-75559) discloses a technique for displaying an event log as a timeline on screen, but any technique of automatically generating reports is not set forth therein.

Document 2 (JP-A-2018-106271) discloses an analysis system equipped with a function of automatically selecting a report layout. More specifically, during the process of analyzing measurement data, a sequence of operations performed by the user is stored as manual control information. It can be said that the manual control information indicates a procedure taken when measurement data is analyzed after acquisition of the measurement data. If the user operates the report generation button, a certain layout is automatically selected based on the stored manual control information, and a report is produced based on the certain layout. Document 2 discloses neither an event log generated in response to recording of a sequence of operations performed by the measurement section nor the use of such an event log. Furthermore, Document 2 does not disclose a technique of permitting the user to judge which of automatically generated candidate reports should be selected.

In a sample analysis system, during the process of sample analysis, a sequence of operations performed by the measuring section is recorded and thus an event log is generated. The event log contains a sequence of events which have relationships from a viewpoint of report generation. Such a sequence of events can be referred to as an event pattern. Conventional sample analysis systems have not utilized event patterns. Especially, there is no active use of event patterns in automatic report generation.

### SUMMARY

It is an object of the present disclosure to permit reports to be created with less burden on the user.

It is another object of the disclosure to permit reports to be created while making active use of event patterns contained in an event log.

It is a further object of the disclosure to provide a new structure which presents candidate reports to the user and urges he or she to determine which of the candidate reports should be selected.

A sample analysis system associated with the present disclosure includes a processor which operates (i) to manage a plurality of event patterns and a plurality of templates respectively corresponding to the event patterns, (ii) to generate an event log by recording a plurality of events produced in chronological order in a process of sample measurement, (iii) to select, when a match is determined between a certain series of events contained in the event log and a certain event pattern in the event patterns, a certain template corresponding to the certain event pattern from the plurality of templates, (iv) to incorporate one or more sets of data acquired by execution of the certain series of events into the certain template, thereby generating a candidate report, and (v) to selectively select or delete the candidate report according to a user's instruction.

A method of report generation associated with the present disclosure is implemented in a sample analysis system and comprises the steps of: managing a plurality of event patterns and a plurality of templates respectively corresponding to the event patterns; generating an event log by recording a plurality of events produced in chronological order in a process of sample measurement; selecting, when a match is determined between a certain series of events contained in the event log and a certain event pattern in the event patterns, a certain template corresponding to the certain event pattern from the plurality of templates; incorporating one or more sets of data acquired by execution of the certain series of events into the certain template, thereby generating a candidate report; and selectively selecting or deleting the candidate report according to a user's instruction.

### BRIEF DESCRIPTION OF THE DRAWINGS

FIG. 1 is a block diagram showing one example of configuration of a sample analysis system associated with one embodiment of the present disclosure.
FIG. 2 is a diagram illustrating a method of generating candidate reports in accordance with another embodiment of the disclosure.
FIG. 3 is a table illustrating one example of event log.
FIG. 4 is a diagram illustrating a management table.
FIG. 5 is a diagram illustrating a first example of event pattern definition.
FIG. 6 is a diagram illustrating a second example of event pattern definition.
FIG. 7 is a diagram illustrating a third example of event pattern definition.
FIG. 8 is a diagram illustrating automatic execution of a data analysis.
FIG. 9 is a diagram of one example of UI image displayed on a display device.
FIG. 10 is a timing chart illustrating examples of operation.
FIG. 11 is a flowchart illustrating a first example of a subroutine for generation of candidate reports.
FIG. 12 is a flowchart illustrating a second example of the subroutine for generation of candidate reports.
FIG. 13 is a flowchart illustrating a subroutine for deletion of candidate reports.
FIG. 14 is a diagram illustrating a modification of the management table of FIG. 4.

### DESCRIPTION OF EMBODIMENTS

The embodiments of the present disclosure are hereinafter described in detail with reference to the drawings.

### (1) Overview of Embodiment

A sample analysis system associated with one embodiment of the present disclosure includes a processor which operates to manage a plurality of event patterns and a plurality of templates respectively corresponding to the event patterns and to generate an event log by recording a plurality of events chronologically produced in a process of sample management. Then, based on these operations, the processor selects, when a match is determined between a certain series of events contained in the event log and a certain event pattern in the event patterns, a certain template corresponding to the certain event pattern from the plurality of templates. The processor then incorporates one or more sets of data acquired by execution of the certain series of events into the certain template and generates a candidate report. Subsequently, the processor selectively selects (utilizes) or deletes the candidate report according to a user's instruction.

According to this structure, for example, if the certain event pattern is contained in the event log, a candidate report is automatically generated based on the certain template corresponding to the certain event pattern. If the automatic candidate report generation is repeated, a needed candidate report having suitability as a formal report will be generated. In addition, an unwanted candidate report unsuitable as a formal report will be generated. As needed, a necessary candidate report is adopted as a formal report according to a user's instruction or an unwanted candidate report is deleted according to a user's instruction. This structure permits a user to create a formal report set with much less burden on the user than where such a set is created manually.

In a process of sample measurement, one or a plurality of samples are measured. Recorded events include a major event for obtaining data. Furthermore, the recorded events may include minor events in which no data acquisition is made. Examples of the major events include image acquisition events and spectrum acquisition events. Examples of the minor events include sample processing, neutralization, sample introduction, sample extraction, and stage movement. A template is a form for a report. Selection of a template is equivalent to selection of a report format or report layout. In the present embodiment, if a series of events satisfies or conforms to a certain event pattern definition, it is found that there is a match between the series of events and the certain event pattern.

In the present embodiment, the processor searches for a plurality of event patterns based on a certain series of events extracted from an event log and finds a certain event pattern. This is herein referred to as the first search method. Alternatively, the processor searches an event log based on a certain event pattern selected from plural event patterns and finds a certain series of events. This is herein referred to as the second search method. When the first search method is implemented, plural series of events including the finally recorded, newest event may be extracted as a certain event pattern. When the second search method is implemented, certain event patterns may be successively selected from a plurality of event patterns.

Normally, one template is made to correspond to one event pattern, but plural templates may be made to correspond to one event pattern, in which case plural candidate reports may be simultaneously generated based on the plural templates. One template may be made to correspond to a plurality of event patterns.

In the present embodiment, the processor repeatedly executes the candidate report generating subroutine. As a result, a list of candidate reports is created. The candidate report generating subroutine involves finding a matching pair of certain series of events and a certain event pattern, selecting a certain template, and incorporating one or more sets of data into the certain template. Plural candidate reports may be simultaneously or successively presented as a list of candidate reports to the user.

In the present embodiment, the above-described user's instruction is a user's Delete instruction. The processor deletes one or more candidate reports from the list of candidate reports based on the user's Delete instruction. The remaining one or more candidate reports are adopted as one or more formal reports. Those candidate reports left undeleted, i.e., candidate reports adopted as formal reports, may be specified by the user.

In the present embodiment, if there exists unused data which was derived during the process of sample measurement but which has not been incorporated into any candidate report, then the processor generates an additional candidate report including the unused data. The additional candidate report is included in the list of candidate reports. According to this configuration, incomplete use of data can be prevented. That is, generation of data not reflected in any candidate report can be prevented.

In the present embodiment, the processor repeatedly executes the candidate report generating subroutine in the course of the process of sample measurement. According to this configuration, candidate reports are successively created in parallel with the progress of the process of sample measurement. This can accelerate the completion time of a set of formal reports. During the process of sample measurement, unwanted candidate reports may be deleted by the user. Desirably, the set of formal reports is completed at or immediately after the end of the process of sample measurement.

In the present embodiment, each of the plurality of event patterns is defined by plural events and their attributes. Examples of the attributes include coordinates (a position) and a magnification.

In the present embodiment, the above-described candidate report is herein referred to as the first candidate report. If the above-described match is determined, the processor applies a certain data analysis corresponding to the certain event pattern to one or more sets of data acquired by execution of a certain series of events. Then, the processor incorporates the results of the certain data analysis into the certain template, thus creating a second candidate report.

With this configuration, the certain data analysis can be carried out with less burden on the user. Candidate reports pertinent to both of the first candidate report having one or more sets of data incorporated therein and the second candidate report having the results of the data analysis incorporated therein may be generated.

In the present embodiment, the processor analyzes plural report samples created through repetition of user's template selection and data selection. Consequently, the processor identifies the event patterns and their respective corresponding templates. This configuration permits automated identification of corresponding relationship between the event patterns and the templates.

A method of report generation associated with another embodiment of the present invention is implemented in a sample analysis system. The method of report generation involves a managing step, an event log generating step, a template selecting step, a data incorporating step, and a sorting step. In the managing step, a plurality of event patterns and a plurality of templates respectively corresponding to the event patterns are managed. In the event log generating step, a plurality of events chronologically produced in a process of sample management is recorded. Consequently, an event log is generated. In the template selecting step, when a match is determined between a certain series of events contained in the event log and a certain event pattern in the event patterns, a certain template corresponding to the certain event pattern is selected from the plurality of templates. In the data incorporating step, one or more sets of data acquired by execution of the certain series of events are incorporated into the certain template. Consequently, a candidate report is created. In the selecting step, the candidate report is selectively selected or deleted according to a user's instruction.

The above-described method of report generation is realized as hardware functions or software functions. A computer program for executing the method of report generation may be installed into an information processing device via a mobile storage medium or a network. Examples of the information processing device include computers, sample analysis instruments, and sample analysis systems. The information processing device has a storage medium for non-temporarily storing the above-described program. A program product having the above-described program may be offered to the user.

### (2) Details of Embodiment

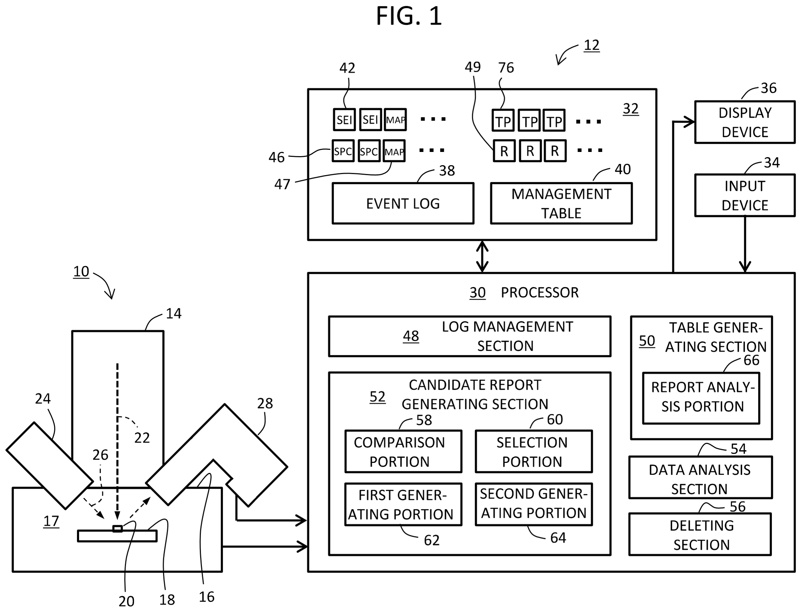

FIG. 1 shows an example of configuration of the sample analysis system associated with the present embodiment. The sample analysis system is used to analyze sample surfaces, for example. The sample analysis system associated with the present embodiment has a function of performing sample analysis using Auger electron spectroscopy. The configuration described below may be applied to other sample analysis systems.

The sample analysis system of the present embodiment has a measuring section 10 and an information processing section 12. The measuring section 10 is equipment for irradiating a sample with an electron beam and detecting electrons released from the sample. In particular, the measuring section 10 has an electron optical column 14 and an enclosure 16. The electron optical column 14 is supported by the enclosure 16. A lens system including an electron gun, scan coils, and an objective lens is mounted inside the electron optical column 14.

The interior of the enclosure 16 forms a sample chamber 17 where a sample stage 18 is mounted. A sample 20 is held by the sample stage 18. In the illustrated example of configuration, irradiation equipment 24 for emitting ions 26 is mounted in the enclosure 16. Also, an Auger electron spectrometer or detector 28 is mounted. During etching of the sample, the sample 20 is irradiated with the ions 26. Also, during neutralization of the sample, it is irradiated with the ions 26. The Auger electron spectrometer 28 is a semispherical electrostatic spectrometer, for example. A secondary electron detector and a backscattered electron detector (none of which are shown) are mounted in the enclosure 16. An X-ray detector may be mounted in the enclosure 16.

The information processing section 12 is made of a computer, for example, and has a processor 30, a memory 32, input devices 34, and a display device 36. The input devices 34 include a keyboard and a pointing device. The display device 36 is a liquid crystal display, for example.

The processor 30 is, for example, a CPU for executing programs. Other processor such as a GPU (graphics processing unit) may also be provided. The memory 32 is, for example, a semiconductor memory. An event log 38 and a management table 40 are built on the memory 32 in a manner described in detail below. Various data including data about SEM images 42, spectra 46, and elemental maps 47 are also stored in the memory 32. In addition, a plurality of templates 76 are stored in the memory 32. Also, generated plural reports 49 are stored in the memory 32. A plurality of candidate reports described in detail below are also stored in the memory 32.

The processor 30 generates the SEM images each representing a two-dimensionally scanned area on a sample surface based on an output signal from a secondary electron detector or other detector. Also, the processor generates the elemental maps each representing a two-dimensionally scanned area on a sample surface based on an output signal from the Auger electron spectrometer 28. A plurality of mutually different elemental maps may be produced at the same time. In a point analysis, the processor 30 produces a spectrum from spectral dispersion occurring at a point specified within a two-dimensionally scanned area. A plurality of points may be specified, and a plurality of spectra corresponding to these points may be produced simultaneously or successively.

In FIG. 1, a plurality of functions exhibited by the processor 30 (in particular, functions relating to report generation) is represented by a plurality of blocks. The processor 30 functions as a log management section 48, a table generating section 50, a candidate report generating section 52, a data analysis section 54, and a deleting section 56.

The log management section 48 generates the event log 38 by recording a plurality of operations or states chronologically produced as events in the measuring section 10 and manages the generated event log 38. In particular, whenever an event occurs, the log management section 48 generates event information and attaches it to the event log.

An event log can be also referred to as a timeline. Event information describes events and contains attributes relating to the events. Events contain main events that acquire data and sub-events that do not acquire data. Examples of main event include acquisition of an SEM image, acquisition of an elemental map, and acquisition of a spectrum. Examples of attributes relating to main event include magnification and position (observational coordinates or measurement coordinates). Examples of sub-events include introduction of a sample, extraction of a sample, movement of a sample stage, and etching of a sample.

The table generating section 50 generates and manages the management table 40 which is composed of a plurality of event patterns and their respective corresponding templates as shown below.

The table generating section 50 has a report analysis portion 66 which generates a management table by analyzing a plurality of reports or a plurality of report samples created by a user with a manual. In particular, the report analysis portion 66 identifies an event pattern by analyzing the individual report samples or their respective corresponding sets of event information. Also, the analysis portion 66 identifies a template selected at the time of generation of the report samples. The user may register a set of the event pattern and the template.

The candidate report generating section 52 has a comparison portion 58, a selection portion 60, a first generating portion 62, and a second generating portion 64. The comparison portion 58 acts also as a decision portion or a determination portion. The first generating portion 62 and the second generating portion 64 function as a first data incorporating portion and a second data incorporating portion, respectively.

The comparison portion 58 compares plural series of events extracted from the event log 38 with the event patterns in the management table 40 and makes a decision or a determination as to whether there is a match of the certain series of events in the event log 38 to the certain event pattern in the management table 40. In other words, the comparison portion 58 finds a matching pair of the certain series of events and the certain event pattern.

If it is found that there is a match, i.e., if a matching pair is found, the selection portion 60 selects a certain template corresponding to the certain event pattern from the plural templates within the management table 40 and extracts the certain template.

The first generating portion 62 incorporates one or more sets of data into an extracted certain template, the sets of data being obtained by execution of the certain series of events. Consequently, the first generating portion 62 creates a candidate report.

In a process of sample measurement, the candidate report generating section 52 operates repeatedly. In other words, during this process, the candidate report generating subroutine is carried out repeatedly and involves finding a matching pair by the comparison portion 58, selection of a certain template by the selection portion 60, and data incorporation by the first generating portion 62.

The candidate report generating section 52 has the second generating portion 64 which identifies unused data from a data aggregate acquired during the process of sample measurement and generates an additional candidate report having the unused data incorporated therein. The unused data have not been incorporated into any candidate report when the data aggregate was made.

The list of candidate reports is made up of one or more candidate reports generated by the first generating portion 62 and one or more candidate reports generated by the second generating portion 64. The list is displayed on the display device 36. The user enters a Delete instruction while specifying an unwanted candidate report in the list of candidate reports.

The deleting section 56 deletes the candidate report specified by the user in accordance with the user's Delete instruction. This deletion means an exclusion of the candidate report from the formal set of reports. As necessary, the deletion of candidate report is repeated. The finally residual one or more candidate reports are treated as the formal set of reports. That is, each finally remaining individual candidate report is regarded as a formal report. Instead of a Delete instruction, a Select instruction may be entered.

According to the need, data analysis is associated with individual event patterns. The data analysis section 54 executes the data analysis. In particular, the data analysis section 54 applies certain data analysis associated with the certain event pattern to one or more sets of data obtained by execution of the certain series of events. In this case, the first generating portion 62 incorporates the one or more sets of data into a certain template and also incorporates the results of the certain data analysis. Only the results of the data analysis may be incorporated into the certain template.

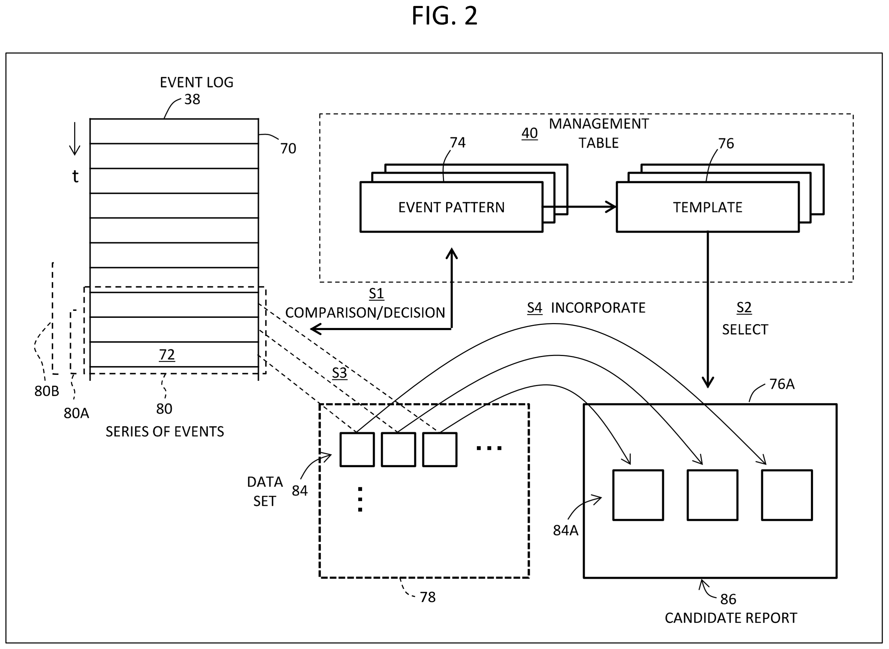

FIG. 2 schematically illustrates a method of generating candidate reports in accordance with another embodiment of the present disclosure. The event log 38 is composed of a plurality of events produced in chronological order. More specifically, the event log 38 is composed of a plurality of sets of event information 70 indicating a plurality of events. The event which is newest at the present time and which was registered last is indicated by 72. More specifically, the symbol 72 indicates the newest event information representing the newest event. The management table 40 is used to manage the event patterns 74 and their respective corresponding templates 76. A plurality of template IDs may be registered in the management table 40 instead of the templates.

First, in a comparing step S1, the event log 38 and the event patterns 74 are compared, and the certain series of events 80 and the certain event pattern 74 which match each other are identified. In the example of FIG. 2, the series of events 80 is made up of a plurality of events which include the newest event and which are in chronological order. Plural series of events (such as 80, 80A, and 80B) of differing sizes may be extracted in turn. For example, the plural event patterns 74 may be searched based on the extracted certain series of events.

Alternatively, the event log 38 may be searched based on certain event patterns successively selected from the plural event patterns 74.

If a matching pair of the certain series of events and the certain event pattern is found, a selecting step S2 is carried out. That is, the certain template 76 corresponding to the certain event pattern is selected and extracted from the plurality of templates 76. Symbol 76A denotes the extracted certain template.

In an identifying step S3, one or more sets of data (i.e., a data set 84) are identified from the collection of data 78 acquired heretofore by execution of the certain series of events 80. In a data incorporating step S4, the data set 84 is incorporated into the extracted template 76A. The incorporated data set is indicated by symbol 84A. As a result, a candidate report 86 is generated. In the illustrated example, the plural sets of data constituting the data set 84 are inserted in three regions of the template 76A. Which data in the data set should be inserted into which region in the template 76A is predetermined.

In a process of sample measurement, the above-described subroutine, namely the candidate report generating subroutine is carried out repeatedly. Consequently, a plurality of candidate reports are created. Furthermore, a list of these candidate reports is created.

The candidate report generating subroutine may be performed whenever the newest event is recorded. When the series of events and the event pattern are compared, a partial match search may be applied in addition to a full match search. For example, where m events including the newest event have been extracted from an event log, the m events including the newest event, the (*m -* 1) events including the newest event, the (*m -* 2) events including the newest event, and the (*m* - 3) events including the newest event may be compared to the plural event patterns 74.

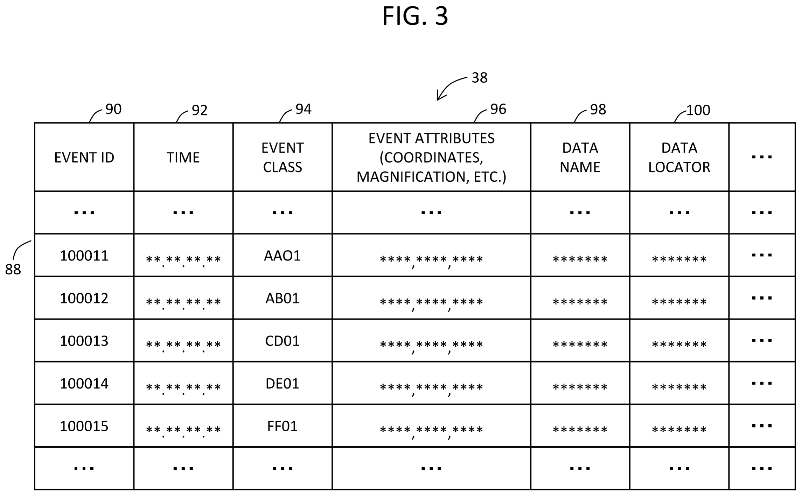

In FIG. 3, the event log 38 is shown as one example of event log and consists of a plurality sets of event information 88 representing a plurality of events. Each set of event information 88 contains an event ID 90, time 92, an event class 94, event attributes 96, a data name 98, and a data locator 100. The event ID 90 is an event identifier. The time 92 indicates a time at which an event occurred. Examples of the event class 94 include acquisition of an SEM image, acquisition of an elemental map, acquisition of a spectrum, milling of a sample, and a stage movement. The event attributes 96 contain coordinates (such as observational coordinates and measuring coordinates) and a magnification. The data name 98 is a data file name. The data locator 100 is a URL (Uniform Resource Locator), for example.

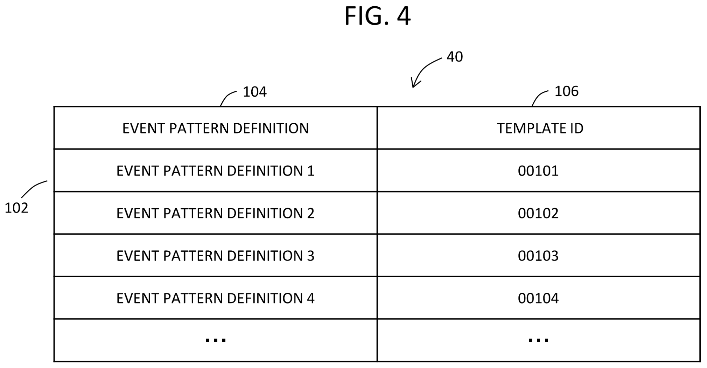

In FIG. 4, the management table 40 is shown as one example of management table and is used to manage the corresponding relationship between a plurality of event patterns and a plurality of templates. In particular, the management table 40 is composed of a plurality of event pattern definitions 104 and a plurality of template IDs 106. Indicated by 102 are event patterns and corresponding templates which form pairs. The event pattern definitions include information identifying the configurations of the plural events and descriptions stipulating the corresponding relationship between event attributes.

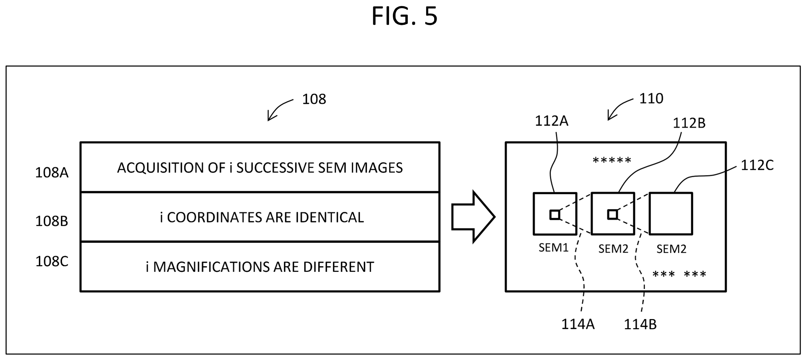

In FIG. 5, an event pattern definition 108 is shown as a first example of event pattern definition and includes a first condition 108A, a second condition 108B, and a third condition 108C which are to be satisfied by a series of events. In the illustrated example, the first condition 108A is satisfied if *i* SEM images in chronological order are acquired, it being noted that *i* is an integer equal to or greater than 2, for example. The second condition 108B is satisfied if *i* observational coordinates used when *i* SEM images are taken are all identical. The third condition 108C is satisfied if *i* magnifications used when *i* SEM images are taken are different.

If the series of events extracted from the event log satisfies the event pattern definition 108, a match is determined and a template 110 is selected. In the illustrated example, *i* = 3. Three SEM images extracted during the series of events are placed in three regions 112A, 112B, and 112C, respectively, of the template 110. Symbols 114A and 114B indicate relationships between different magnifications. According to the need, text information or the like is also inserted into the template 110.

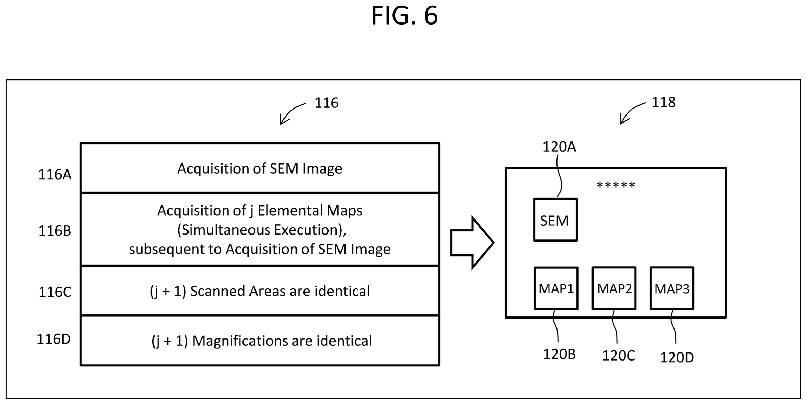

In FIG. 6, an event pattern definition 116 is shown as a second example of event pattern definition and contains a first condition 116A, a second condition 116B, a third condition 116C, and a fourth condition 116D which are to be satisfied by a series of events. In the illustrated example, the first condition 116A is satisfied when an SEM image has been acquired. The second condition 116B is satisfied if *j* elemental maps are simultaneously obtained subsequent to the acquisition of the SEM image, it being noted that *j* is an integer equal to greater than 2, for example. The third condition 116C is satisfied if the scanned area used when the SEM image is acquired and the scanned area used when the *j* elemental maps are obtained are the same. The fourth condition 116D is satisfied if the magnification used when the SEM image is acquired and the magnification used when the *j* elemental maps are obtained are identical.

If the series of events taken from the event log satisfies the event pattern definition 116, a match is determined and a template 118 is selected. In the illustrated example, *j* = 3. Three elemental maps derived during the series of events are placed in three regions 120B, 120C, and 120D, respectively, of the template 118. A single SEM image acquired during the series of events is placed in a region 120A of the template 118.

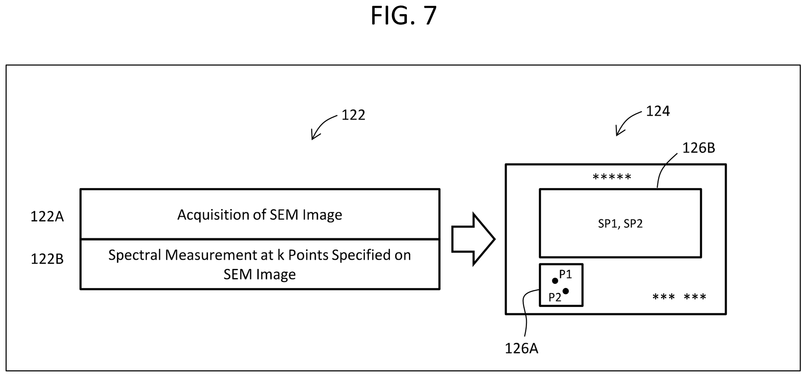

In FIG. 7, an event pattern definition 122 is shown as a third example of event pattern definition and contains a first condition 122A and a second condition 122B that are to be satisfied by a series of events. In the illustrated example, the first condition 122A is satisfied when an SEM image has been acquired. The second condition 122B is satisfied when a spectral measurement is carried out on *k* points specified on the SEM image, it being noted that *k* is an integer equal to or greater than 1, for example.

If a series of events taken from the event log satisfies the event pattern definition 122, a match is determined and a template 124 is selected. In the illustrated example, *k* = 2. An SEM image is placed in a region 126A of the template 124. Two spectra are placed in a region 126B of the template 124. The horizontal axis is an energy axis. The vertical axis is an intensity axis.

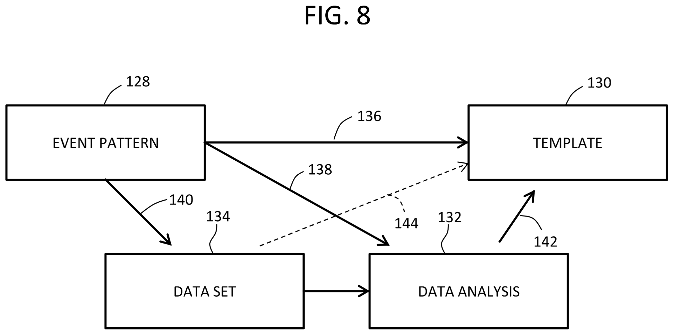

As shown in FIG. 8, a data analysis 132 may be made to correspond to the event pattern 128 in addition to the template 130. If the series of events taken from the event log conforms with the event pattern 128, the template 130 corresponding to the event pattern 128 is identified as shown by reference numeral 136, the data analysis 132 is identified as shown by reference numeral 138, and a data set 134 obtained by execution of the series of events is identified as shown by reference numeral 140.

The data analysis 132 of the data set 134 is automatically done, and the result of the data analysis is incorporated into the template 130 as shown by reference numeral 142. Furthermore, the data set 134 may be incorporated into the template 130 as shown by reference numeral 144. The scheme illustrated in FIG. 8 makes it possible to generate a formal report set with still less burden on the user.

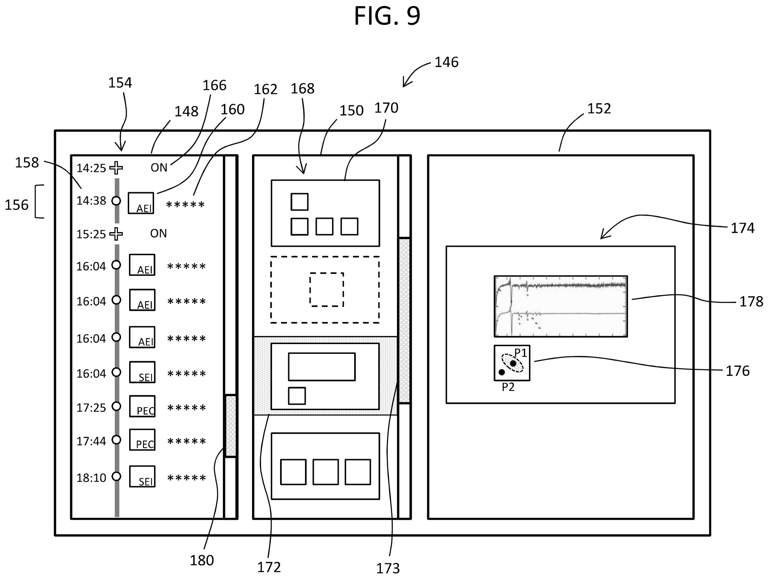

In FIG. 9, a UI (user interface) screen 146 is shown as one example of UI screen displayed on a display device and has a first display region 148, a second display region 150, and a third display region 152.

The event log 154 is totally or partially displayed on the first display region 148 and consists of a vertical series of items 156. The individual items 156 represent the contents of events. For example, each item 156 has a time 158, a thumbnail image 160, and a file name 162. The thumbnail image 160 is a minified image representing an image obtained by execution of an event. A symbol indicating an image type or event type is shown together with the thumbnail image 160. A symbol 166 indicates execution of a neutralizing step. The portion of the event log 154 which is actually displayed can be modified by operation of a scroll bar 180.

An automatically generated list 168 of a plurality of candidate reports 170 is displayed on the second display region 150. A candidate report selected by the user is indicated by symbol 172. Items to be deleted may be specified by such a selection. The actually displayed portions of the list 168 of candidate reports can be varied by operation of a scroll bar 173. An array of images acquired may be displayed on the second display region 150.

A candidate report 174 is displayed as an enlarged image on the third display region 152. The candidate report 174 is equivalent to the candidate report 172 selected by the user on the second display region 150. The candidate report 174 has an SEM image 176 and a spectral image 178. An acquired image may be displayed enlarged on the third display region 152.

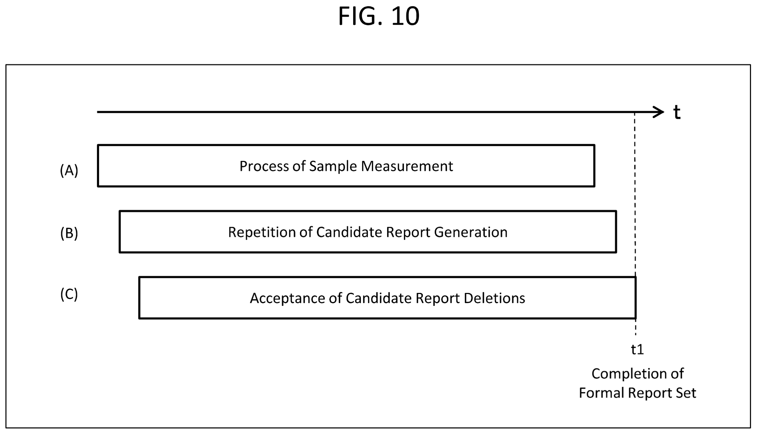

An example of operation of the sample analysis system shown in FIG. 1 is depicted as a timing chart in FIG. 10, in which the horizontal axis is a time axis. In this chart, (A) indicates a process of sample measurement, (B) indicates a period in which candidate report generation is repeated, and (C) indicates a period in which an instruction for deleting candidate reports is accepted. In parallel with the process of sample measurement, the candidate report generation is repeated. Throughout these periods, instructions for deleting candidate reports are accepted as needed. As a result, at timing t1, a formal report set is completed. In the prior art, after the end of a process of sample measurement, a user manually creates a plurality of reports. According to the sample analysis system of the present embodiment, a formal report set can be obtained immediately after the end of a process of sample measurement. Of course, after the end of a process of sample measurement, a data analysis may be carried out manually. Also, new additional reports may be manually generated.

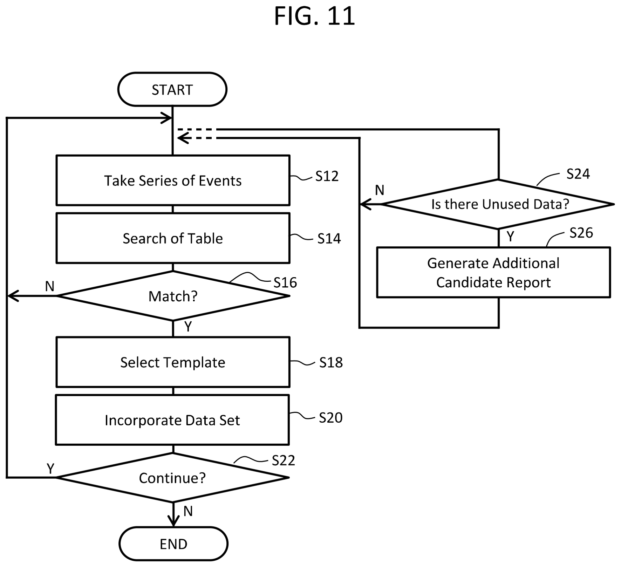

FIG. 11 illustrates a first example of a subroutine for generating candidate reports in accordance with a further embodiment of the present disclosure. At step S12, a series of events is taken from an event log. For example, the series of events includes the newest event and is made up of *m* events arrayed along the time axis, it being noted that *m* is an integer equal to or greater than 2. At step S14, the table is searched for an event pattern that matches the extracted series of events. If it is found that there is no match between them, another series of events is taken from the event log at step S12. In this case, the number of events constituting the series of events may be varied. Also, the position at which a series of events is extracted may be varied.

At step S16, if it is found that there is a match between the series of events and the event pattern, a template corresponding to the matching event pattern is selected at step S18. At step S20, a data set obtained by execution of the matching series of events is incorporated into the selected template. The results of the analysis performed on the data set may be incorporated into the selected template together with or instead of the data set.

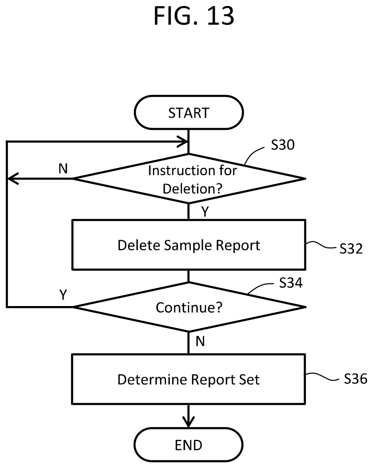

At step S22, a decision is made as to whether the present subroutine is continued or not. Process steps S24 and S26 are executed periodically in response to interrupts or when a certain condition is met. At step S24, a decision is made as to whether unused data is contained in the data aggregate acquired heretofore. If the decision is Yes, control goes to step S26, where a candidate report including the unused data is generated. As a result of the execution of the method of generation of candidate reports as illustrated in FIG. 11, a list of candidate reports is created. As will be described with reference to FIG. 13, some candidate reports can be deleted while new candidate reports are being generated.

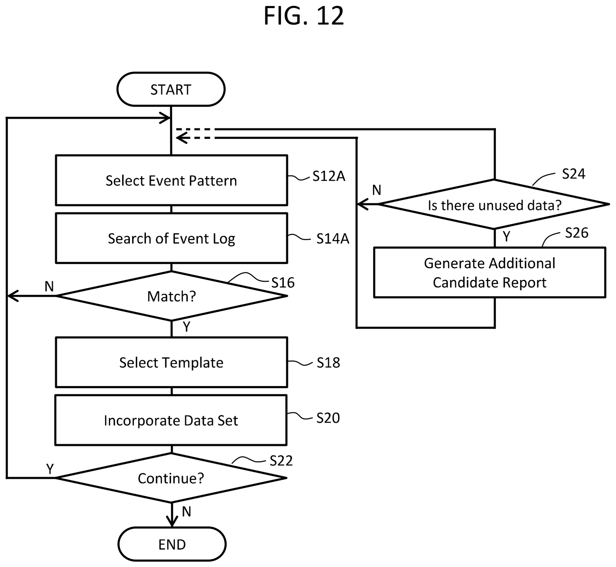

FIG. 12 illustrates a second example of the subroutine for generating candidate reports in accordance with the present embodiment. In FIG. 12, steps identical to their respective counterparts illustrated in FIG. 11 are indicated by the same reference numerals as in FIG. 11 and a description thereof is omitted.

At step S12A, one event pattern is selected from a plurality of event patterns. At step S14A, the event log is searched based on the selected event pattern. That is, a series of events that matches the selected event pattern is searched for. At step S16, if it is found that there is a match, steps S18 and S20 are carried out in the same manner as in the above-described first example.

FIG. 13 illustrates a subroutine for deleting reports in accordance with a further embodiment of the present disclosure. At step S30, a decision is made as to whether there is a user's instruction for deletion. If the decision is affirmative (Yes), control goes to step S32, where a candidate report specified by the user is deleted. That is, it is dropped from the list of candidate reports. At step S34, a decision is made as to whether the present subroutine is continued or not. If the decision is negative (No), control goes to step S36, where a list of candidate reports available at that time is regarded as a formal report set.

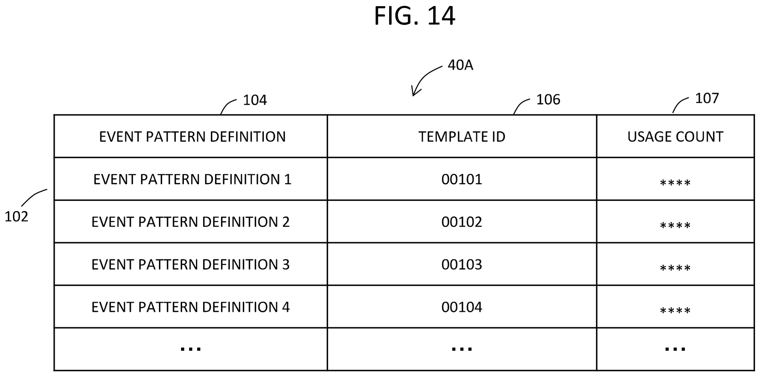

Referring to FIG. 14, a management table 40A is shown as a modification of the above-described management table 40, and is composed of a plurality of records 102. Each record 102 contains a usage count 107 as well as an event pattern definition 104 and a template ID 106. For example, if one series of events matches a plurality of event patterns, plural usage counts which are made to correspond to the event patterns are compared. An event pattern corresponding to the maximum usage count may be selected. Alternatively, during a search for an event pattern, a plurality of event patterns may be compared with a series of events in turn from the greatest usage count.

## Claims

1. A sample analysis system comprising a processor (30) which operates
to manage a plurality of event patterns (74) and a plurality of templates (76) respectively corresponding to the event patterns (74),
to generate an event log (38) by recording a plurality of events produced in chronological order in a process of sample measurement,
to select, when a match is determined between a certain series of events contained in the event log (38) and a certain event pattern in the event patterns (74), a certain template (76A) corresponding to the certain event pattern from the plurality of templates (76),
to incorporate one or more sets of data (84) acquired by execution of the certain series of events into the certain template (76A), thereby generating a candidate report (86), and
to selectively select or delete the candidate report (86) according to a user's instruction.

2. A sample analysis system as set forth in claim 1, wherein said processor (30) searches said plurality of event patterns (74) based on said certain series of events extracted from said event log (38) to find said certain event pattern or searches said event log (38) based on said certain event pattern selected from said plurality of event patterns (74) to find said certain series of events.

3. A sample analysis system as set forth in claim 1 or claim 2, wherein said processor (30) repeatedly executes a candidate report generating subroutine to thereby create a list (168) of candidate reports, and wherein the candidate report generating subroutine involves finding a matching pair of said certain series of events and said certain event pattern (S1), selecting the certain template (S2), and incorporating said one or more sets of data into the certain template (S4).

4. A sample analysis system as set forth in claim 3, wherein said user's instruction is an instruction for deletion, and wherein said processor (30) deletes one or more candidate reports from said list of candidate reports based on the user's instruction for deletion and adopts one or more remaining candidate reports as one or more formal reports.

5. A sample analysis system as set forth in claim 3 or claim 4, wherein if there is unused data which is obtained during said process of sample measurement and which has not been incorporated into any candidate report, said processor (30) generates an additional candidate report containing the unused data, and wherein said list of candidate reports contains the additional candidate report.

6. A sample analysis system as set forth in any one of claims 3 to 5, wherein said processor (30) repeatedly carries out said candidate report generating subroutine while said process of sample measurement is in progress.

7. A sample analysis system as set forth in any one of claims 1 to 6, wherein each of said plurality of event patterns (74) is defined by a plurality of events and their attributes.

8. A sample analysis system as set forth in any one of claims 1 to 7, wherein said candidate report (86) is a first candidate report, and wherein when said match is determined , said processor (30) applies a certain data analysis (132) corresponding to said certain event pattern (128) to one or more sets of data (134) acquired by execution of said certain series of events and incorporates results of the certain data analysis (132) into said certain template (130), thus generating a second candidate report.

9. A sample analysis system as set forth in any one of claims 2 to 8, wherein said processor (30) analyzes a plurality of report samples generated through the user's repetitive selection of template and data, thereby identifying said plurality of event patterns (74) and said plurality of templates (76).

10. A method of report generation implemented in a sample analysis system, comprising the steps of:
managing a plurality of event patterns (74) and a plurality of templates (76) respectively corresponding to the event patterns (74);
generating an event log (38) by recording a plurality of events produced in chronological order in a process of sample measurement;
selecting (S2), when a match is determined (S1) between a certain series of events contained in the event log (38) and a certain event pattern in the event patterns (74), a certain template (76A) corresponding to the certain event pattern from the plurality of templates (76),
incorporating (S4) one or more sets of data (84) acquired by execution of the certain series of events into the certain template (76A), thereby generating a candidate report (86); and
selectively selecting or deleting the candidate report (86) according to a user's instruction.

11. A computer program for executing a method of report generation in an information processing device, said computer program comprising the functions of:
managing a plurality of event patterns (74) and a plurality of templates (76) respectively corresponding to the event patterns (74);
generating an event log (38) by recording a plurality of events produced in chronological order in a process of sample measurement;
selecting, when a match is determined between a certain series of events contained in the event log (38) and a certain event pattern in the event patterns (74), a certain template (76A) corresponding to the certain event pattern from the plurality of templates (76);
incorporating one or more sets of data (84) acquired by execution of the certain series of events into the certain template (76A), thereby generating a candidate report (80); and
selectively selecting or deleting the candidate report (86) according to a user's instruction.
